# EUROPEAN PATENT APPLICATION

(11) **EP 4 230 825 A1**
(43) Date of publication of application: **23.08.2023**
(21) Application number: 22382133.1
(22) Date of filing: 17.02.2022
(51) Int. Cl.: E04H 12/08, E04H 12/12, F03D 13/20

(54) **TOWER CONNECTOR**

(71) Applicant: Siemens Gamesa Renewable Energy Innovation & Technology S.L., 31621 Sarriguren (Navarra) (ES)
(72) Inventor: Alonso Gainza, Javier, 31621 Sarriguren, Navarra (ES); Cal Hernandez, Alexandre, 01009 Vitoria (ES); San Vicente Larrechi, Borja, 01003 Vitoria (ES); Unanua Hermoso de Mendoza, Pablo, 31699 Olloki - Navarra (ES)
(74) Representative: SGRE-Association

(57) **Abstract**

The invention describes a frustum connector (1) for connecting wind turbine tower portions (20S, 20C), which frustum connector (1) comprises a plurality of individual steel segments (1S), wherein each segment (1S) comprises two side edges (10_{side}), an upper edge (10ₜₒₚ) and a lower edge (10_{bottom}), wherein the length of the lower edge (10_{bottom}) of a segment (1S) exceeds the length of the upper edge (10ₜₒₚ) of that segment (1S); and wherein the vertical side edges (10_{side}) of adjacent segments (1S) are adapted for connection at a wind turbine installation site. The invention further describes a wind turbine tower (20) and a method of constructing a wind turbine tower (20).

## Description

### Background

A wind turbine tower can be made of stacked steel sections. However, for a wind turbine with a tall tower and/or a powerful generator and/or long rotor blades, a "full steel" design (in which the tower is made only of steel) generally requires a large wall thickness and a large diameter at the tower base. Such a full steel tower can therefore be very expensive, and the difficulty in transporting the lower sections (which can have diameters exceeding the maximum permissible restrictions for road transport) means that such towers can only be realised at locations having the necessary transport infrastructure.

A wind turbine tower generally has an overall conical form, with the largest diameter at the base, and the smallest diameter at the top. In order to minimise costs while fulfilling requirements of flexibility and structural strength, a wind turbine tower may be constructed in a hybrid manner, with a concrete lower portion and a steel upper portion.

In a prior art hybrid tower, the transition from concrete to steel can be placed relatively high up, so that the steel section can be realised at lower expense. If the lowest diameter of the steel tower section is less than the upper diameter of the concrete tower section, a tapered transition section can be deployed to connect the two tower sections. However, because of its wide lower diameter, such a hybrid tower connector can be very expensive to transport. In most regions, it may even be impossible to transport such a hybrid tower connector to an installation site. For example, for most countries in Europe, the maximum permissible width and height of a load transported by road are 2.55 m and 4 m respectively, but the width of a prior art tower connector can exceed these limits. A permit may be required to transport a load that exceeds one of these dimensions, but the permit application process can incur delays and can significantly add to the costs of a planned wind turbine installation. Of course, any load that exceeds the physical limits of the local road or rail infrastructure cannot be transported.

A wind turbine will oscillate at a "natural frequency" determined primarily by its structural properties (the mass supported by the tower, the tower height, the structural properties of the tower, etc.). Excessive oscillation amplitudes or oscillation within a "forbidden" frequency band can lead to structural fatigue, and the wind turbine tower design should minimize such undesirable behaviour. In general, a tower will be designed to avoid "forbidden" frequency bands.

In the case of a hybrid tower comprising a concrete lower section and a steel upper section, undesirable oscillation frequencies can be pre-empted at the design stage by installing a large mass (e.g. a concrete block) near the top of the tower; choosing a shorter concrete section to decrease the concrete-to-steel transition height and/or choosing a greater tower wall thickness to obtain a desirable stiffness (resulting in greater expense for the steel tower portion); choosing an overall shorter tower to decrease the hub height (resulting in a lower overall power output and lower revenue). Another possibility is to implement concrete of a higher quality, but in some countries this may not be possible.

Another wind turbine design constraint to be considered is the rotor blade length and the tip-tower clearance at the level of the tip of the downward-pointing rotor blade. This can be done by designing the rotor blades of a wind turbine to have a pronounced curvature in the upwind direction when not loaded, however this increases the manufacturing costs by a significant amount. Another way of increasing the tip-tower clearance is to construct the wind turbine so that the generator's rotational axis is tilted upwardly from the horizontal, but this design measure may compromise the efficiency of the wind energy plant at lower wind speeds.

For a specific rotor blade length and rotor blade shape, a desired minimum tip-tower clearance can be achieved by a correspondingly narrow tower diameter at that level. In the case of a hybrid tower with a concrete lower portion extending above the rotor blade tip level, it may be necessary to shape the concrete portion to achieve the necessary tower diameter at the rotor blade tip level. However, a reduction in diameter at that height is associated with increased costs regarding the pre-tensioning tendons and concrete strength required to meet the structural constraints.

It is therefore an object of the invention to provide an improved wind turbine tower that overcomes the problems outlined above.

This object is achieved by the claimed tower connector, by the claimed wind turbine tower, by the claimed wind turbine, and by the claimed method of constructing a wind turbine tower.

### Description

The claimed frustum connector is particularly suited for use as an intermediate section of a hybrid wind turbine tower, i.e. an intermediate section connecting a steel upper tower section to a concrete lower tower section.

According to the invention, the frustum connector is composed of a plurality of individual or separate segments that can be connected together to form an intermediate tower section. According to the invention, each segment of the frustum connector comprises two vertical side edges, an upper edge and a lower edge, wherein the length of the lower edge of a segment exceeds the length of the upper edge of that segment. The shape of a segment is therefore essentially trapezoidal. The vertical side edges of adjacent segments are connected by suitable fastening means.

The segments may be assumed to have vertical side edges of the same length. When all segments of the tower connector are joined along their side edges, the resulting structure has a collective lower circumference (with a length corresponding to the combined lengths of the lower edges) and a collective upper circumference (with a length corresponding to the combined lengths of the upper edges). Because its lower circumference exceeds its upper circumference, the overall shape of the inventive tower connector is a right frustum. The terms "frustum connector", "segmented connector", "segmented frustum connector", "tower connector" etc. are regarded as synonyms and may be used interchangeably herein.

The problems described in the introduction are overcome by the inventive frustum connector, which allows optimization of a wind turbine tower of essentially any desired combination of lower portion height (height of the concrete tower portion) and upper portion height (height of the steel tower portion). The many possible configurations of the frustum connector allow the concrete-to-steel transition to be placed at any desirable height, and facilitate a combination of a favourably wide and short concrete section with a favourably narrow and long steel section.

Furthermore, the possibility of implementing a relatively small diameter at the junction between the frustum connector and upper tower section means that a tower-tip clearance can be achieved for long rotor blades. This makes it possible to install a wind turbine with tall tower and long rotor blades at relatively low cost, particularly in logistically difficult locations otherwise associated with prohibitively expensive transport issues for large-diameter tower parts.

A further advantage of the inventive frustum connector is the freedom to place the concrete-to-steel transition at a lower level, with a favourably large diameter at the top of the concrete section, so that the requirements regarding pre-tensioning tendons of the concrete section can be fulfilled at lower cost.

According to the invention, the wind turbine tower comprises a lower tower portion, an upper tower portion, and an embodiment of the inventive tower connector, wherein the collective lower edge of the frustum connector is connected to the apex of the lower tower portion and the collective upper edge of the frustum connector is connected to the base of the upper tower portion.

In the following, it may be assumed that the lower tower portion is made of concrete, and that the upper tower portion is made of steel, for example a set of stacked steel sections. A tower portion (also referred to as "tower section" in the following) can have the form of a right cylinder, i.e. its upper and lower diameters are similar or identical. Alternatively, a tower section can have a frustoconical form, i.e. its upper diameter is less than its lower diameter.

A tapered form is generally adopted for wind turbine tower sections, since a wide base is preferred for reasons of structural stability, while the relatively small diameter at the tower apex is determined by the diameter of the yaw assembly. Because the lowermost diameter of the wind turbine tower exceeds the uppermost diameter, the overall shape of the tower is a right frustum, i.e. the tower is symmetrical about a vertical axis and has an essentially frusto-conical shape. Without restricting the invention in any way, it may be assumed that the wind turbine tower is essentially hollow, and that the combination of wall thicknesses and diameter of the various tower sections are chosen to achieve a desired structural strength. It shall be understood that the concrete tower portion, the steel tower portion and the frustum connector are all hollow structures.

According to the invention, the wind turbine comprises an embodiment of the inventive wind turbine tower, a nacelle mounted at the apex of the upper tower portion; and an aerodynamic rotor mounted at the front of the nacelle, comprising a plurality of rotor blades mounted to a hub.

An advantage of the inventive wind turbine is that it can be constructed to exploit the permissible hub height determined by the combination of wind class at the installation site and the generator rating.

According to the invention, the method of constructing a wind turbine tower comprises at least the steps of constructing a lower tower portion at the wind turbine installation site; transporting segments of an embodiment of the inventive frustum connector to the installation site; assembling the frustum connector (by joining the vertical sides of adjacent segments) and connecting the collective lower edge of the frustum connector to the apex of the lower tower portion.

An advantage of the inventive method is that the construction of a tall hybrid tower can be made at lower cost. Transport of the frustum connector is relatively economical, and the segments of the inventive tower connector can be brought to remote geographical regions or regions with poor infrastructure with relatively low cost. The taller wind turbine towers made possible by the inventive method mean that the prevalent wind conditions of such geographical locations can be better exploited.

Particularly advantageous embodiments and features of the invention are given by the dependent claims, as revealed in the following description. Features of different claim categories may be combined as appropriate to give further embodiments not described herein.

In the following, it may be assumed that the segments of the inventive tower connector are made of steel, for example rolled steel, using any suitable manufacturing technique. In one embodiment, the inventive frustum connector is made as a single part at a manufacturing site, and then cut into a suitable number of segments prior to transport. Alternatively, in a further preferred embodiment of the invention, the segments can be formed separately.

To complete the manufacturing stage of the frustum connector, flanges can be added (for example by welding) along upper and lower edges of each segment to facilitate connection to the steel tower portion and concrete tower portion during construction of a wind turbine tower.

The number of segments may be chosen according to transport restrictions, e.g. to ensure that a load is not wider than 2.55 m and not higher than 4 m. The frustum segments can then be transported at relatively low cost to the wind turbine installation site. The frustum connector is then assembled at the installation site, for example by welding the side edges of adjacent segments.

Preferably, the largest dimension of a tower connector segment does not exceed the applicable road transport restrictions, so that one or more segments can be transported to the wind turbine installation site by road or rail. In this way, the invention overcomes the costly transport problems associated with the wide tower connectors known from the prior art, which require special transport solutions.

It may be assumed that the segments of the tower connector are essentially identical, i.e. the segments can be connected in any order. Furthermore, it may be assumed that each segment of the tower connector is symmetric about a vertical axis. In an embodiment of the inventive tower connector, the segments are flat. In this case, the segmented frustum connector has the shape of a right pyramidal frustum or right polygonal frustum. In a preferred embodiment of the invention, the segments of the inventive tower connector are curved so that, when assembled, the segmented frustum connector has the shape of a right conical frustum.

In a preferred embodiment of the invention, each segment of the tower connector comprises a flange along each vertical edge to facilitate connection to a corresponding flange of an adjacent segment. The flanges can comprise matching through-holes, so that two adjacent segments can be joined by suitable fasteners, for example an arrangement of threaded bolts and nuts. Alternatively, the vertical edges of adjacent segments may be flat and may overlap, and can have matching sets of through-holes to receive suitable fasteners.

The tower connector can be arranged as an intermediate part between a lower tower part and an upper tower part, as indicated above. These parts can be joined or connected in any suitable fashion. In a preferred embodiment of the invention, the collective length of the lower edges of the tower connector corresponds to a circumference at the apex of a lower tower portion. Preferably, each tower connector segment comprises a flange along its lower edge to facilitate connection to a flange at the apex of the lower tower portion. A flange along the lower edge of a flat tower connector segment can be arc-shaped, so that the assembled pyramidal tower connector can be connected to a circular flange at the apex of the lower tower section. Alternatively, the apex of the lower tower section can be provided with a suitable interface that can be joined to the polygonal flange collectively formed at the lower edge of a pyramidal tower connector.

In a further preferred embodiment of the invention, the collective length of the upper edges of the tower connector corresponds to a circumference at the base of an upper tower portion. Preferably, each tower connector segment comprises a flange along its upper edge to facilitate connection to a flange at the base of the upper tower portion. Here also, a flange along the upper edge of a segment can be arc-shaped, even if the segment itself is flat. In this way, the assembled segmented frustum connector can be connected to a circular flange at the base of the upper tower section. Alternatively, the base of the upper tower section can be provided with a suitable interface that can be joined to the polygonal flange collectively formed at the upper edge of a pyramidal tower connector.

The segmented tower connector can have a shape that segues from a circular apex to a polygonal base, so that the tower connector can be installed at the interface between a polygonal concrete lower tower section and a cylindrical upper tower section.

The inventive frustum connector can be described in terms of its height and diameter ratio, i.e. the ratio of lower diameter to upper diameter. For example, a frustum connector with large diameter ratio and small height has an overall "squat" shape; a frustum connector with small diameter ratio and large height has an overall "elongate" shape.

The inventive frustum connector increases the number of possible combinations of concrete and steel tower sections. For example, a "squat" tower connector can connect a wide concrete section to a narrow steel section in a relatively abrupt manner; an "elongate" tower connector (tall with small diameter ratio) can connect those same tower sections in a less abrupt manner. For two towers with identical concrete and steel sections, the height of the tower can be increased by implementing the "elongate" frustum connector. Alternatively, in the case of two towers with identical concrete sections and tower heights, implementing the "squat" frustum connector allows the length of the narrow steel section to be increased in order to achieve a desired tip-tower clearance at a level above the tower connector. The height, upper diameter and lower diameter of the frustum connector can be chosen to optimize multiple aspects of the wind turbine such as tower oscillation frequency, rotor blade length, power output, etc.

As indicated above, a wind turbine tower has a natural frequency, determined primarily by its structural properties (height, relative proportions of steel and concrete sections, wall thicknesses, etc.) and various other factors. Fore-aft oscillations are generally more pronounced that side-to-side oscillations. Oscillations within certain frequency bands (defined by the wind turbine mode of operation) can lead to structural fatigue, and the wind turbine tower design should minimize or avoid oscillations at such frequencies. The rotor frequency ("1P" frequency) and the rotor blade passing frequency and its harmonics ("3P" and "6P" frequencies) should ideally not overlap the tower natural frequency to avoid resonance. An exemplary range for the 1P frequency can be 0.2 - 0.3Hz, and exemplary ranges for the 3P and 6P frequencies can be 0.7 - 0.8Hz and 1.4 - 1.6Hz respectively.

Other objects and features of the present invention will become apparent from the following detailed descriptions considered in conjunction with the accompanying drawings. It is to be understood, however, that the drawings are designed solely for the purposes of illustration and not as a definition of the limits of the invention.
Figure 1 shows an embodiment of the inventive wind turbine;
Figures 2 - 7 shows various exemplary embodiments of the inventive wind turbine tower;
Figure 8 shows an embodiment of the inventive frustum connector during assembly;
Figure 9 shows a partial cross-section through an embodiment of the inventive wind turbine tower;
Figure 10 shows a prior art hybrid wind turbine tower.

In the diagrams, like numbers refer to like objects throughout. Objects in the diagrams are not necessarily drawn to scale.

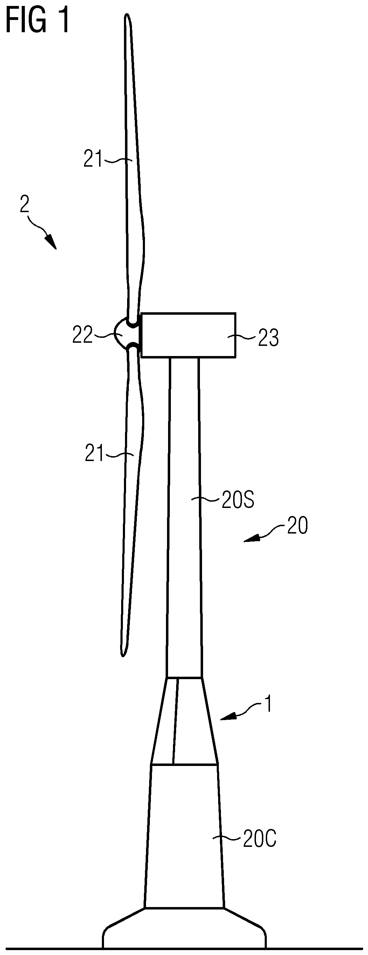

Figure 1 shows a wind turbine 2 with an embodiment of the inventive wind turbine tower 20. The diagram indicates a concrete lower section 20C (on a wider concrete apron or pedestal of a foundation) and a steel upper section 20S of the tower 20, with an embodiment of the inventive frustum connector 1 in between. The wind turbine 2 has rotor blades 21 mounted to a hub 22 at the front of the nacelle 23. The nacelle 23 is rotatably mounted to the tower 20 by means of a yaw arrangement, as will be known to the skilled person.

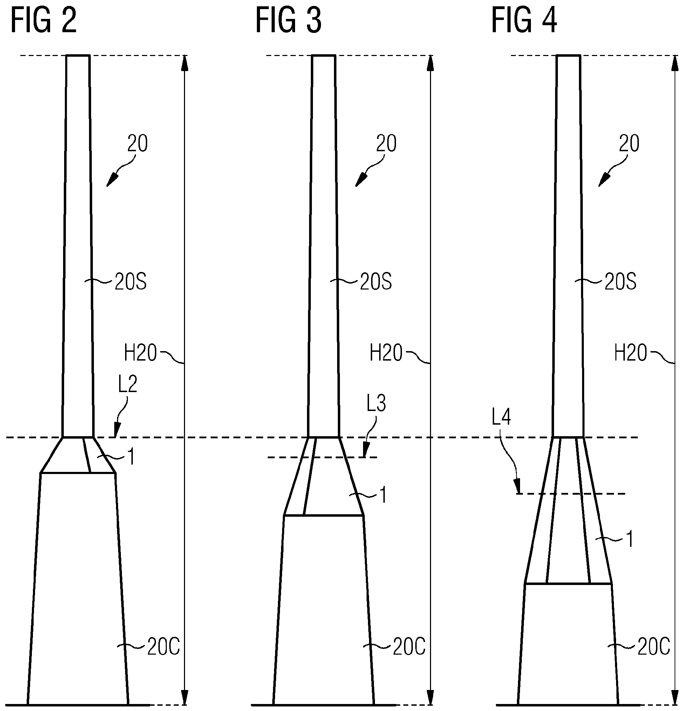

Figures 2 - 4 show possible realisations of the inventive wind turbine tower 20, each with the same steel section 20S, and the same diameter at the apex of the concrete section 20C. The diameter ratio of the frustum connector 1 is also the same in each case. In Figure 2, the height of the frustum connector 1 is relatively low, so that the tip-tower clearance of a rotor blade is limited to level L2 at the base of the steel section 20S. Such a tower construction may be appropriate when a wind energy plant with relatively short rotor blades is to be installed in a region with Wind Class 1, or when the cost of the steel tower section is to be minimized and/or when high-quality steel is unavailable for manufacturing the steel section 20S, etc.

In Figure 3, the height of the frustum connector 1 is increased, and the height of the concrete section 20C is decreased. This achieves a longer tip-tower clearance at level L3, below the base of the steel section 20S. Such a tower construction may be appropriate when the wind energy plant is to be installed in a region with Wind Class 1 or 2, or when high-quality concrete is unavailable for manufacturing the concrete section 20C, etc.

In Figure 4, the height of the frustum connector 1 is increased further, and the height of the concrete section 20C is decreased further. This achieves an even longer tip-tower clearance at level L4, even further below the base of the steel section 20S. The overall lower transition height between the concrete section 20C and the rest of the tower 20 can reduce the natural frequency of the tower 20.

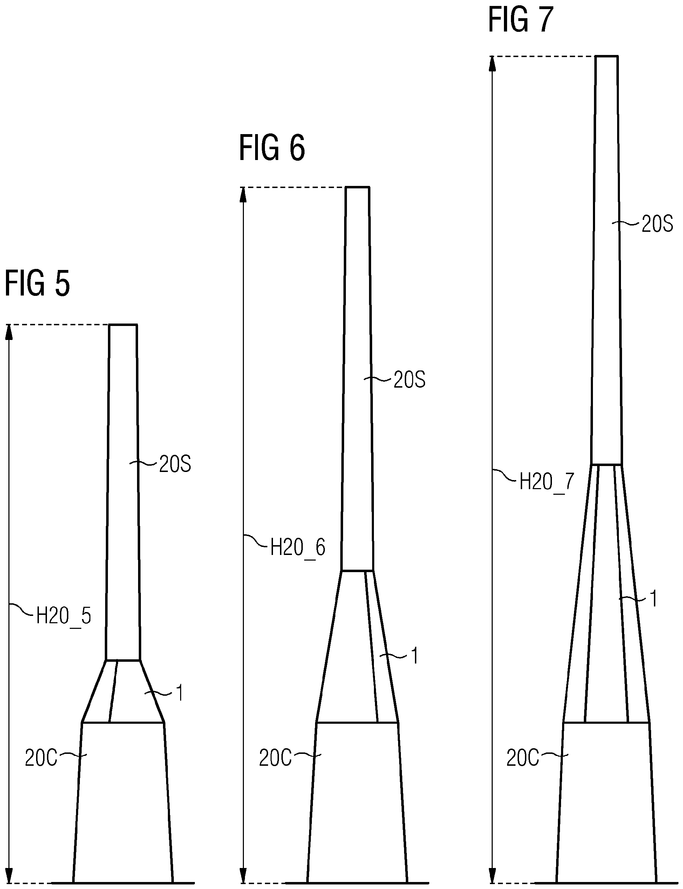

Figures 5 - 7 show further possible realisations, each with the same concrete section 20C and the same steel section 20S. The diameter ratio of the frustum connector 1 is also the same in each case. In Figure 5, the height of the frustum connector 1 is relatively low, so that the tower height HT5 is also relatively low. Such a relatively short tower height may be appropriate when the wind energy plant is to be installed in a region with Wind Class 1, when high-quality steel and/or concrete are unavailable for manufacturing the tower sections 20S, 20C, etc.

In Figure 6, the height of the frustum connector 1 is larger, so that the tower height HT6 is also increased compared to Figure 5. This tower height may be appropriate when the wind energy plant is to be installed in a region with Wind Class 2, for example.

In Figure 7, the height of the frustum connector 1 is even greater, so that the tower height HT7 is increased further compared to Figure 6. This tower height may be appropriate when the wind energy plant is to be installed in a region with Wind Class 3, for example, in order to maximize the energy that can be harvested from the wind. Equally, such a tall tower can be possible when high-quality steel and concrete are available for manufacturing the tower sections 20S, 20C.

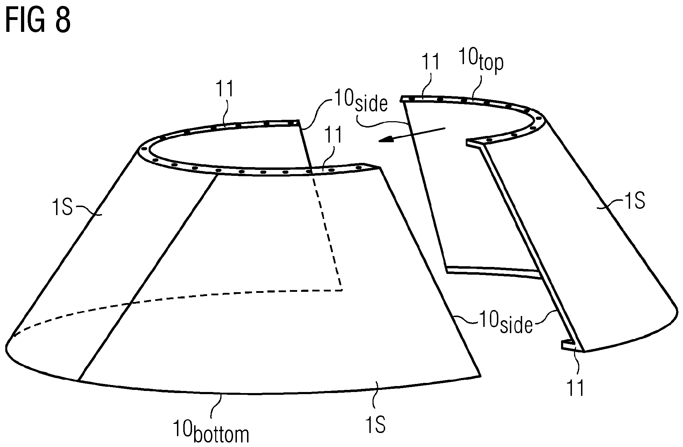

Figure 8 shows an exploded diagram of an exemplary embodiment of the inventive frustum connector 1, showing three segments 1S of the connector 1 in an assembly stage (performed at the wind turbine installation site). In this embodiment, adjacent segments 1S can be joined by welding the long edges of each segment 1S. Here, three segments 1S will be joined to complete the frustum. The diagram shows two segments 1S already welded along their long edges 10_{side}. As indicated in the drawing, each segment 1S has two "vertical" side edges 10_{side}, an upper edge 10ₜₒₚ and a lower edge 10_{bottom}. The length of the lower edge exceeds the length of the upper edge of a segment 1S, and both sides have equal length. The overall shape of a segment is therefore trapezoidal. In this embodiment, the segments 1S are curved to achieve a frustoconical shape in the assembled state, but the segments 1S could equally well be flat to achieve a pyramidal frustum wherein assembled.

With any of the above designs, a satisfactory tip-tower clearance can be achieved by a wind turbine tower implementing the inventive frustum connector, even for a wind turbine with very long rotor blades. Because of this, the inventive frustum connector makes it possible to construct a wind turbine tower at lower cost.

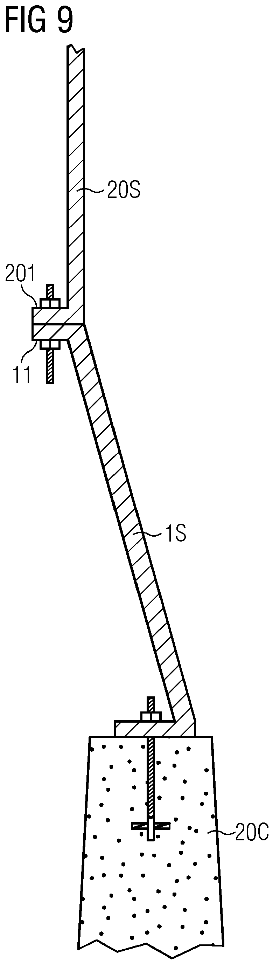

Figure 9 shows a partial cross-section through the tower 20 at the level of the tower connector. The diagram shows a possible realisation of a connection between the steel tower section 20S and the frustum connector 1, in this case the connection is achieved by threaded fasteners 12 inserted into through-holes of matching inward-facing flanges 201, 11 of the steel section 20S and the frustum connector 1. The diagram also shows a possible realisation of a connection between the frustum connector 1 and the concrete tower section 20C, in this case the connection is achieved by an inward-facing flange 11 of the frustum connector 1, and threaded fasteners 12 embedded in and protruding from the apex of the concrete section 20C.

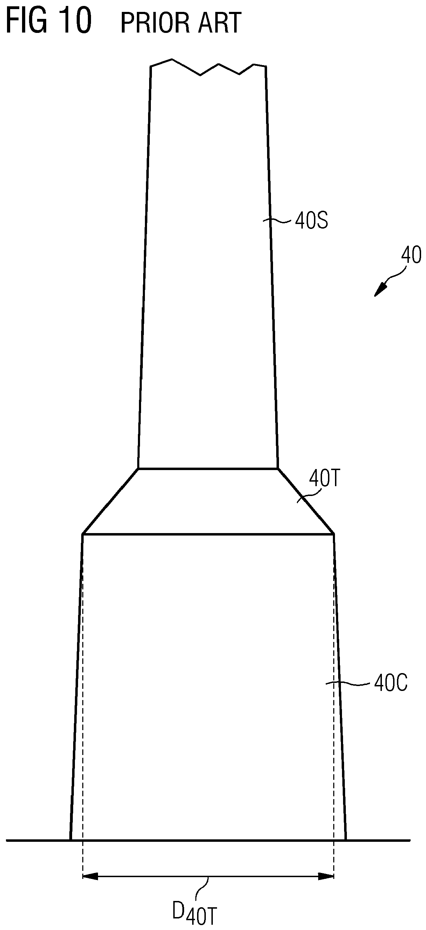

Figure 10 illustrates a problem known from the prior art. The drawing shows a hybrid frustoconical tower 40 with a steel upper section 40S, a concrete lower section 40C, and a frustum connector 40T in between. The various elements combine to give a desired tower height for a specific wind turbine installation. The concrete section 40C can be cast in situ. The tubular upper section 40S can comprise multiple sub-sections, which can be transported horizontally. Transport of the frustum connector 40T is more complicated, since the wide lower diameter D40T may preclude transport by conventional means (truck flatbed, railcar, etc.), and the local infrastructure may not facilitate dedicated transport solutions. In order to implement a smaller version of the prior art frustum connector 40T, i.e. with dimensions that allow it to be transported using conventional means, the height of the frustoconical concrete section 40C can be increased to achieve a smaller diameter at the apex and a smaller frustum connector 40T. However, the height of the steel section 40S is correspondingly shortened, and the disadvantages of the resulting increase in natural frequency would outweigh any advantage of being able to transport the smaller frustum connector 40T.

Although the present invention has been disclosed in the form of preferred embodiments and variations thereon, it will be understood that numerous additional modifications and variations could be made thereto without departing from the scope of the invention. For example, the concrete tower portion can be cast in situ, or it may be constructed of precast elements that are pre-stressed at manufacture, or poststressed on site. While the invention has been described primarily in the context of an onshore wind turbine, the principle of the inventive segmented frustum connector is equally applicable to a wind turbine tower at an offshore site.

For the sake of clarity, it is to be understood that the use of "a" or "an" throughout this application does not exclude a plurality, and "comprising" does not exclude other steps or elements.

## Claims

1. A frustum connector (1) for connecting wind turbine tower portions (20S, 20C), which frustum connector (1) comprises a plurality of individual steel segments (IS), wherein
- each segment (IS) comprises two side edges (10_{side}), an upper edge (10ₜₒₚ) and a lower edge (10_{bottom}), wherein the length of the lower edge (10_{bottom}) of a segment (IS) exceeds the length of the upper edge (10ₜₒₚ) of that segment (IS); and wherein
- the vertical side edges (10_{side}) of adjacent segments (IS) are adapted for connection at a wind turbine installation site.

2. A frustum connector according to the preceding claim, wherein the side edges (10_{side}) of adjacent segment (IS) are adapted for connection by a weld joint.

3. A frustum connector according to any of the preceding claims, wherein the collective length of the lower edges (10_{bottom}) corresponds to a circumference at the apex of a lower tower portion (20C).

4. A frustum connector according to any of the preceding claims, wherein a segment (IS) comprises a flange (11) along its lower edge (10_{bottom}) to facilitate connection to the apex of the lower tower portion (20C).

5. A frustum connector according to any of the preceding claims, wherein the collective length of the upper edges (10ₜₒₚ) corresponds to a circumference at the base of an upper tower portion (20S).

6. A frustum connector according to any of the preceding claims, wherein a segment (IS) comprises a flange (11) along its upper edge (10ₜₒₚ) to facilitate connection to a flange (201) at the base of the upper tower portion (20S).

7. A frustum connector according to any of the preceding claims, wherein the segments (IS) are made of rolled steel.

8. A frustum connector according to any of the preceding claims, wherein the dimensions of a segment (IS) are chosen to comply with applicable road transport restrictions.

9. A frustum connector according to any of the preceding claims, wherein the steel segments (IS) are cut from a complete frustum formed at a manufacturing site.

10. A wind turbine tower (20) comprising
- a lower tower portion (20C) made of concrete;
- an upper tower portion (20S) made of steel ; and
- a frustum connector (1) according to any of claims 1 to 9, wherein the collective lower edge of the frustum connector (1) is connected to the apex of the lower tower portion (20C), and the collective upper edge of the frustum connector (1) is connected to the base of the upper tower portion (20S).

11. A wind turbine tower according to the preceding claim, wherein the largest diameter of the frustum connector (1) exceeds the smallest diameter of the frustum connector (1) by a factor of at least 1.03.

12. A wind turbine (2) comprising
- a tower (20) according to any of claims 10 to 11;
- a nacelle (23) mounted at the apex of the upper tower portion (20S); and
- an aerodynamic rotor (21, 22) mounted at the front of the nacelle (23), comprising a plurality of rotor blades (21) mounted to a hub (22).

13. A wind turbine according to the preceding claim, wherein the diameter at the base of the upper tower portion (20S) is at most 6 m and the diameter at the apex of the lower tower portion (20C) is at least 4.5 m.

14. A method of constructing a wind turbine tower (20) according to any of claims 10 - 11, the method comprising at least the steps of
- constructing a lower tower portion (20C) at the wind turbine installation site;
- transporting segments (IS) of a frustum connector (1) according to any of claims 1 to 9 to the installation site;
- assembling the frustum connector (1) and connecting the collective lower edge of the frustum connector (1) to the apex of the lower tower portion (20C).

15. A method according to the preceding method claim, comprising a subsequent step of
- transporting components of an upper tower portion (20S) to the installation site; and
- mounting the upper tower portion (20S) to the collective upper edge of the frustum connector (1).
